# EUROPEAN PATENT APPLICATION

(11) **EP 2 196 984 A1**
(43) Date of publication of application: **16.06.2010**
(21) Application number: 08836739.6
(22) Date of filing: 06.08.2008
(51) Int. Cl.: G09F 9/40, G02F 1/1333, G09F 9/00, H04M 1/02

(54) **PORTABLE TERMINAL DEVICE**

(30) Priority: 03.10.2007 JP 2007259609
(71) Applicant: Panasonic Corporation, Kadoma-shi Osaka 571-8501 (JP)
(72) Inventor: TAKABAYASHI, Arisa, Osaka 540-6207 (JP); MATSUJI, Takeo, Osaka 540-6207 (JP); TOMOBE, Shinji, Osaka 540-6207 (JP)
(74) Representative: Grünecker, Kinkeldey, Stockmair & Schwanhäusser Anwaltssozietät
(86) International application number: PCT/JP2008/002136
(87) International publication number: WO 2009/044499

(57) **Abstract**

There is materialized a portable terminal device that prevents deformation or destruction of a main display, which would otherwise be caused when force is exerted on a sub-display provided in an exterior side while an enclosure is folded.

A bottom portion of a sub-display holder 4 is given a shallow tapered shape. Stress on a main display 15, which would concentrate on a bottom portion of the sub-display holder 4 when the portable terminal device is pressed, is dispersed, thereby preventing deformation or destruction of the main display 15.

Corners of a bottom portion of the sub-display holder 4 are made round. Stress that corners of the bottom portion of the sub-display holder 4 exert on the main display 15 is dispersed when the main display is pressed, thereby preventing deformation or destruction of the main display 15.

## Description

### <Technical Field>

The present invention relates to a portable terminal device in which display means, such as a liquid crystal display device, is provided on both sides of an enclosure and, more particularly, to a portable terminal device in which a large so-called main display is provided on one side of an enclosure and a small so-called sub-display is provided on the other side.

### <Background Art>

A commercialized portable terminal device, like a related-art folded portable phone, has a main display that provides various displays when enclosures are opened and a sub-display that displays an incoming call status and a time even when the enclosures are folded.

The related-art portable terminal device is convenient because the device makes it possible to check an incoming call status and a time with enclosures being folded. The portable terminal is held in a pocket or a bag or carried in one hand while folded. Therefore, the enclosures of the portable terminal device are sometimes pressed or dropped to a floor as a result of a user taking a seat while the portable terminal device is held in a pants pocket. In this case, force exerted on the sub-display that is situated on an exterior side with the enclosures being folded is transmitted directly to the main display, thereby deforming the main display. In an extreme case, the main display is sometimes destroyed.

Accordingly, in a configuration proposed for a dual LCD module for a mobile communication terminal in which a main display and a sub-display are vertically stacked, the main display and the sub-display are separated apart from each other at a given interval. A bracket is interposed between the displays so as to support the sub-display while protecting and covering the main LCD.

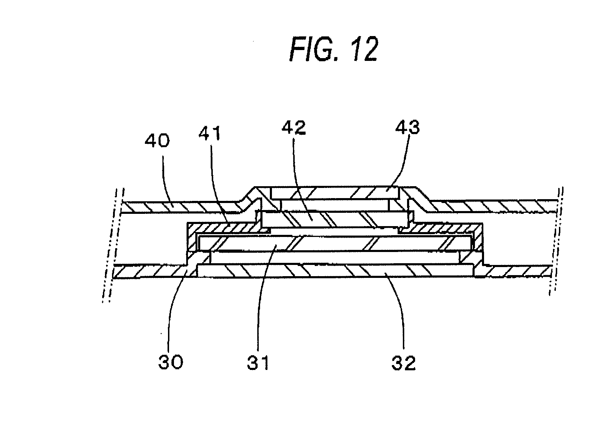

Fig. 12 shows a cross-sectional view of the related-art portable terminal device. In Fig. 12, reference numeral 30 designates a main display enclosure, and reference numeral 40 designates a sub-display enclosure. Reference numeral 41 designates a bracket for fixedly holding the main display and the sub-display spaced apart from each other at a given interval. Reference numeral 31 designates a main display, and reference numeral 42 designates a sub-display. The main display enclosure 30 is provided with a main display transparent window 32, and the sub-display enclosure 40 is provided with a sub-display transparent window 43.

As is obvious from Fig. 12, the main display 31 and the sub-display 42 are held in the main display enclosure 30 and the sub-display enclosure 40 while separated apart from each other by a predetermined space by means of a bracket 41. Since the main display 31 and the sub-display 42 are separated apart from each other by a predetermined interval, the main display 31 and the sub-display 42 do not contact each other even when impact force is exerted on the portable terminal device. The bracket 41 receives the force exerted on the sub-display provided in the exterior side. Even the related-art portable terminal device can thereby prevent deformation or destruction of the main display (see; for instance, Patent Document 1).

However, slimming down of many portable terminal devices, including portable phones, are sought in these days. When slimming down of the portable terminal device is sought, it becomes difficult to assure a required interval for preventing collision between the main display 31 and the sub-display 42 by means of the related-art structure.

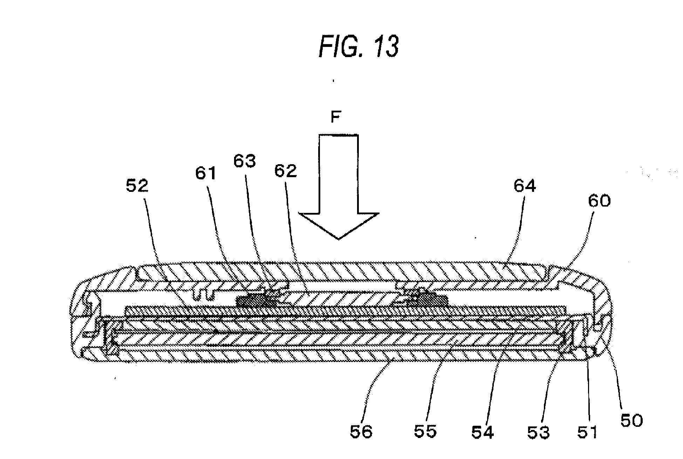

Accordingly, a method for receiving force exerted on the sub-display conceived as another related-art example is to bring a planar component of material substance, such as a printed board, into contact with an undersurface of the sub-display in place of providing space between the main display and the sub-display, as show in Fig. 13. Fig. 13 shows a cross-sectional view of enclosures equipped with a main display and a sub-display of another related-art portable terminal device.

In Fig. 13, reference numeral 50 designates a main display enclosure, and the main display enclosure is overlaid on a sub-display enclosure 60 in its vertical direction. The main display enclosure 50 is provided with a backlight reflection plate 51 made of a stainless plate having a thickness of about 0.3 mm, and a light guide plate 54 made of a transparent plastic plate and a main display 55 made of a liquid-crystal plate are attached to a position below the back light reflection plate 51 by means of a main display holder 53. A main display panel 56 made of a transparent plastic plate is attached to the main display enclosure 50.

In Fig. 13, a printed board 52 is placed on the previously-described back light reflection plate 51, and a sub-display holder 61 previously provided with a sub-display 62 made of a liquid crystal plate is fixed onto the printed board 52. A dustproof sponge 63 is provided around an upper surface of the sub-display 62. The sub-display enclosure 60 is overlaid so as to press the sponge 63. A sub-display panel 64 made of a transparent plastic plate is attached to the sub-display enclosure 60.

When the sub-display panel 64 is pressed in a direction of arrow F shown in Fig. 13, pressing force propagates from the sub-display panel 64 to the sub-display enclosure 60, thereby preventing propagation of force directly to the sub-display 62.

Patent Document 1: JP-A-2006-227627

### <Disclosure of the Invention>

### <Problem that the Invention is to solve>

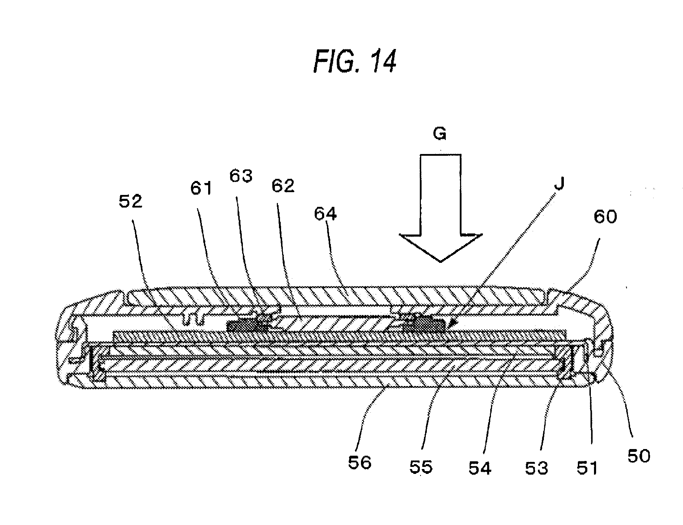

However, as indicated by arrow G in Fig. 14, when pressing force is exerted on a location spaced apart from the center of the sub-display panel 64, the pressing force propagates from the sub-display panel 64 to the sub-display enclosure 60 and further from the sub-display enclosure 60 to the sub-display holder 61. The pressing force is exerted, in a concentrated fashion, on an edge of the sub-display holder 61 as indicated by arrow J, and the force travels to the printed board 52 located below the sub-display holder 61. The force eventually travels to the backlight reflection plate 51, the light guide plate 54, and the main display 55. When pressing force is exerted, the main display become deformed or broken.

A challenge to be met by the present invention is to implement a portable terminal device that includes a main display provided on one side of an enclosure and a sub-display provided on the other side of the same and that prevents deformation or break of the main display, which would otherwise be caused as a result of force being exerted on the sub-display in an exterior side with the enclosures folded.

### <Means for Solving the Problem>

In the present invention, a bottom portion of the sub-display holder is provided with a tapered surface that is shallowly tapered toward the outside of the holder. Pressing force propagating from the bottom portion of the holder of the sub-display to the main display when the portable terminal device is pressed is thereby dispersed, to thus prevent deformation or destruction of the main display.

Further, in the present invention, corners of a bottom portion of the sub-display holder are made round. Pressing force propagating from the corner of the bottom portion of the holder of the sub-display to the main display when the portable terminal device is pressed is thereby dispersed, to thus prevent deformation or destruction of the main display.

Moreover, in the present invention, the sub-display holder has a frame and a back plate straddling the frame. The rigidity of the holder of the sub-display is thereby enhanced, and an amount of deformation developing when the pressing force is exerted on the holder of the sub-display is reduced.

### <Advantage of the Invention>

In a portable terminal device that includes a main display provided on one side of an enclosure and a sub-display provided on the other side of the same, the present invention makes it possible to prevent deformation or destruction of the main display even when the sub-display and the main display come close to each other as a result of the enclosures of the portable terminal device being pressed.

### <Brief Description of the Drawings>

Fig. 1 is an external view of a portable terminal device of a first embodiment of the present invention.
Fig. 2 is a partially cross-sectional view of the portable terminal device of the first embodiment of the present invention.
Fig. 3 is an obliquely perspective view of a sub-display and a sub-display holder of the portable terminal device of the first embodiment of the present invention.
Fig. 4 is a cross-sectional view of the sub-display holder of the portable terminal device of the first embodiment of the present invention.
Fig. 5 is an oblique perspective view of the sub-display holder of the portable terminal device of the first embodiment of the present invention achieved when the sub-display holder is turned inside out.
Fig. 6 is an oblique perspective view of the sub-display holder of the portable terminal device of the first embodiment of the present invention achieved when the sub-display holder is turned inside out.
Fig. 7 is a partially cross-sectional view of the portable terminal device of the first embodiment of the present invention.
Fig. 8 is an obliquely perspective view of a sub-display and a sub-display holder of the portable terminal device of a second embodiment of the present invention.
Fig. 9 is an oblique perspective view of the sub-display holder of the portable terminal device of the second embodiment of the present invention achieved when the sub-display holder is turned inside out.
Fig. 10 is a partially cross-sectional view of the portable terminal device of the second embodiment of the present invention.
Fig. 11 is a partially cross-sectional view of the portable terminal device of the second embodiment of the present invention.
Fig. 12 is a partially cross-sectional view of a related-art portable terminal device.
Fig. 13 is a partially cross-sectional view of another related-art portable terminal device.
Fig. 14 is a partially cross-sectional view of a still another related-art portable terminal device.

### <Descriptions of the Reference Numerals and Symbols>

- 1: MAIN DISPLAY ENCLOSURE
- 2: SUB-DISPLAY ENCLOSURE
- 3: HINGE
- 4: SUB-DISPLAY HOLDER
- 4g: TAPERED SURFACE
- 5: SUB-DISPLAY
- 6: SUB-DISPLAY PANEL
- 7: SPONGE
- 11: REFLECTION PLATE
- 12: PRINTED BOARD
- 13: MAIN DISPLAY HOLDER
- 14: LIGHT GUIDE PLATE
- 15: MAIN DISPLAY
- 16: MAIN DISPLAY PANEL

### <Best Modes for carrying out the Invention>

Best modes for implementing the present invention are hereinbelow described by reference to the drawings.

### (First Embodiment)

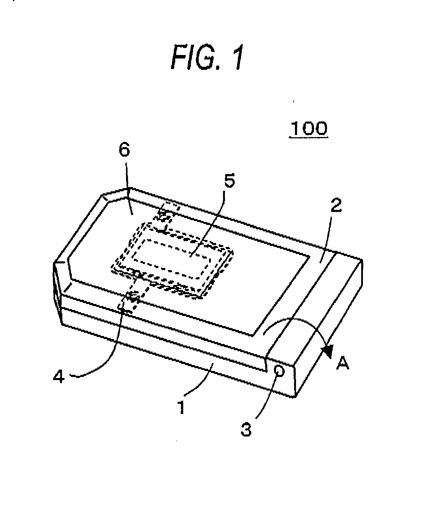

Fig. 1 shows an external perspective view of a portable phone 100 that is a portable terminal device of a first embodiment of the present invention. Fig. 1 shows a closed state of the folded portable phone 100. In the folded portable phone 100, a first enclosure 1 provided with an unillustrated operation section, such as a ten key, and a second enclosure 2 provided with two display sections; namely, a main display and a sub-display, are jointed together so as to be reclosable in a direction of arrow A by means of a hinge 3.

As shown in Fig. 1, the sub-display panel 6 is visible in a folded state of the folded portable phone 100. A sub-display 5 held by a sub-display holder 4 indicated by a broken line is disposed beneath the sub-display panel 6.

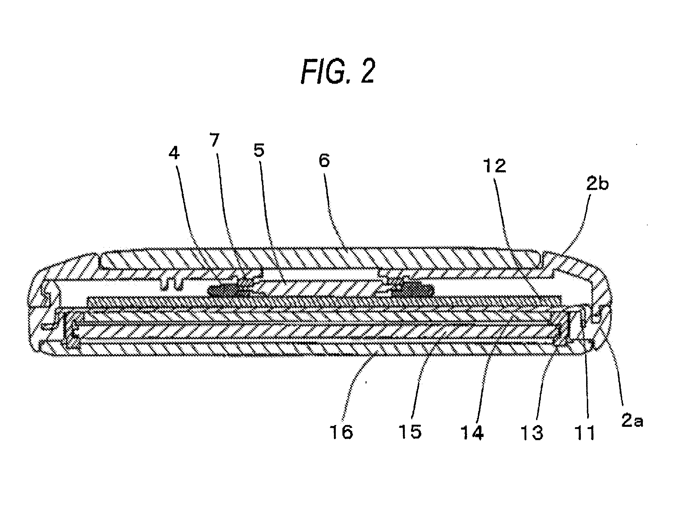

Fig. 2 shows a cross-sectional view of the second enclosure 2 of the folded portable phone 100. In Fig. 2, reference numeral 2a designates a main display enclosure, and the main display enclosure 2a is overlaid on a sub-display enclosure 2b in its vertical direction. The main display enclosure 2a is provided with a backlight reflection plate 11 made up of a stainless plate having a thickness of about 0.3 mm. A light guide plate 14 made of a transparent plastic plate and a main display 15 made of a liquid crystal plate are attached to respective positions below the backlight reflection plate 11 by means of the main display holder 13. A main display panel 16 made of a transparent plastic plate is attached to the main display enclosure 2a. The foregoing structure is identical with the structure of the related-art portable terminal device shown in Fig. 13.

In Fig. 2, the printed board 12 is placed on the backlight reflection plate 11. The sub-display holder 4 provided with the sub-display 5 made of a liquid crystal plate is previously fastened onto the printed board 12. A dustproof sponge 7 is provided around an upper surface of the sub-display 5. The sub-display enclosure 2b is overlaid so as to press the sponge 7. A sub-display panel 6 made of a transparent plastic plate is attached to the sub-display enclosure 2b. The foregoing structure is also identical with the structure of the related-art portable terminal device shown in Fig. 13. The portable terminal device of the first embodiment is characterized by the shape of the sub-display holder 4.

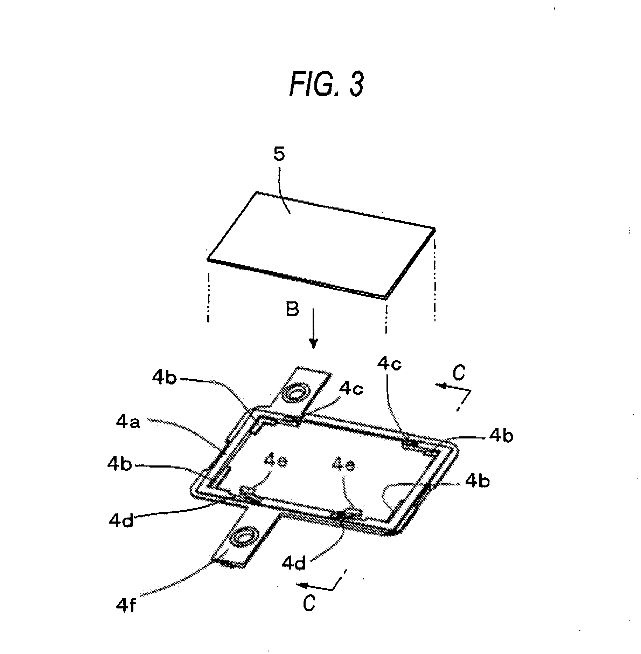

Fig. 3 shows an exploded perspective view of the sub-display holder 4 and the sub-display 5 of the first embodiment when viewed from an upper oblique direction. In Fig. 3, the sub-display 5 is overlaid on the sub-display holder 4 in the direction of arrow B. The shape of the sub-display holder 4 is described. The sub-display holder 4 is a square frame 4a, and supports 4b for receiving the sub-display 5 are formed at respective four internal corners of the frame 4a. A pair of ribs 4c are provided along one interior side of the frame 4a, and a pair of side pressure arms 4d for pressing a side surface of the sub-display 5 are provided on an opposite side. A lift prevention rib 4e is formed on each of the side pressure arms 4d. When attached to the sub-display holder, the sub-display 5 is at one end pressed against the side pressure arm 4d and is hooked at the other end on the rib 4c. Reference numeral 4f designates a fastening section with a screw hole, and an un-illustrated screw is inserted into the screw hole 4f, thereby fixing the printed board.

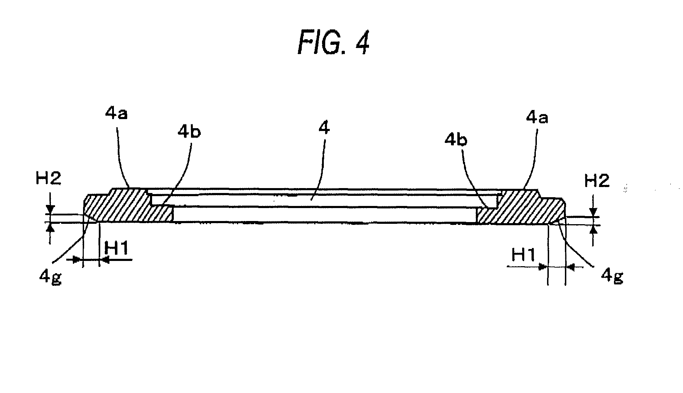

Fig. 4 shows a cross-sectional view of the sub-display holder 4 of the portable terminal device of the first embodiment taken along line C-C shown in Fig. 3. In Fig. 4, reference numeral 4a designates a frame, and 4b designates a support. An undersurface of the sub-display holder 4 becomes thinner toward the outside in a tapered fashion as indicated by reference numeral 4g. In relation to a slope of the taper, a shallow taper is determined by a dimension H2 of the order of 0.2 provided that a dimension H1 shown in Fig. 4 is taken as one. Although the respective corners in the cross section are illustrated as being pointed in Fig. 4, the corners are, in reality, made round and finished into curved surfaces.

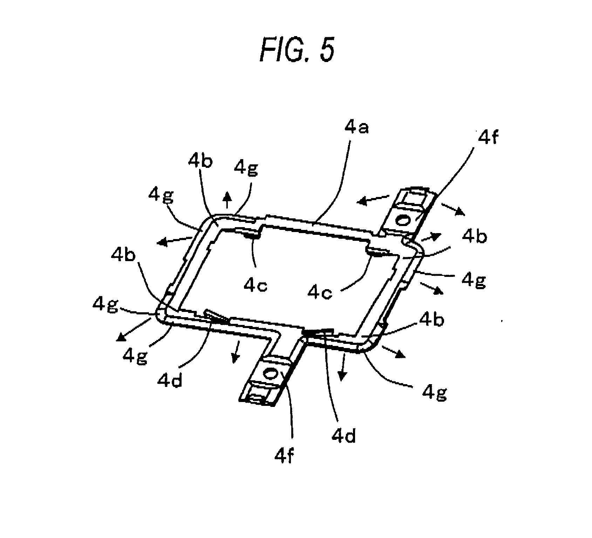

Fig. 5 is an oblique perspective view of the sub-display holder 4 of the first embodiment achieved when the holder is turned inside out. An entire circumference of the undersurface of the sub-display holder 4 is tapered, to thus make up a tapered surface 4g. A circumference of each of the fixing sections 4f also makes up a tapered surface. A small arrow shown in Fig. 5 designates the orientation of the slope of the tapered surface 4g.

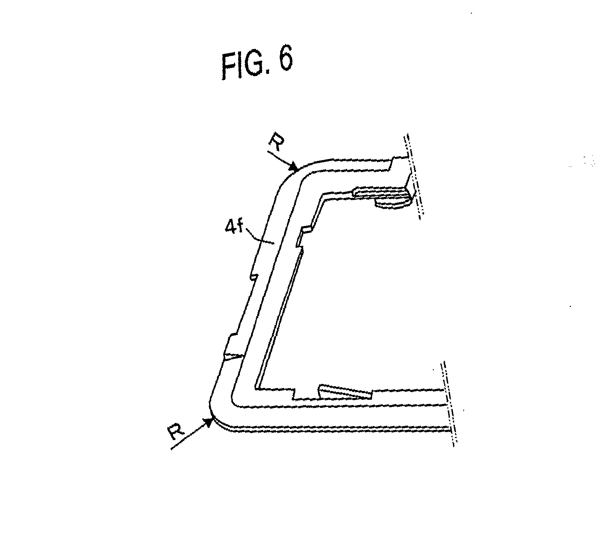

Fig. 6 is a partially enlarged view of the oblique perspective view of the sub-display holder 4 of the first embodiment achieved when the sub-display holder 4 is turned inside out. The drawing shows that each of the corners of the undersurface of the sub-display holder 4 is made round, to thus assume a round shape.

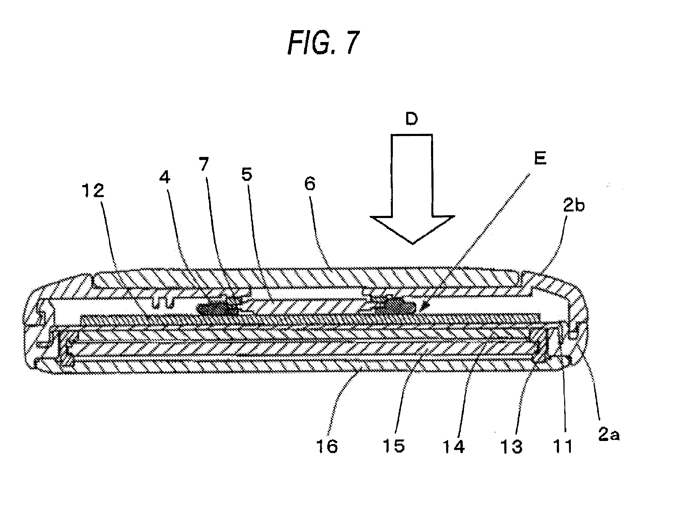

Fig. 7 again shows a cross-sectional profile of the second enclosure 2 of the folded portable phone 100, wherein there is illustrated a state achieved when the sub-display panel 6 starts undergoing a press in a direction of arrow D. Pressing force exerted in the direction of arrow D propagates from the sub-display panel 6 to the sub-display enclosure 2b and further from the sub-display enclosure 2b to the sub-display holder 4. Pressing force propagates from the sub-display holder 4 to the printed board 12 located beneath the sub-display holder as indicated by arrow E. However, the undersurface of the sub-display holder 4 is made thin in a tapered fashion toward the outside. When subjected to pressing force, the tapered surface 4g that is an undersurface of the sub-display holder 4 comes into contact with the printed board. Since the tapered surface 4g and the printed board establish plane contact, the force exerted on the printed board 12 does not concentrate on the corners (edges) and becomes dispersed. Pressure developing between the tapered surface 4g and the printed board 12 comes to a small value. Pressure does not act intensively on the backlight reflection plate 11, the light guide plate 14, and the main display 15 that are located closer to the main display side than is the printed board 12. Deformation or destruction of the main display, which would otherwise be caused as a result of the sub-display and the main display coming close to each other when the enclosures of the folded portable terminal device are pressed, is prevented.

### (Second Embodiment)

A second embodiment of the present invention is now described. The second embodiment of the present invention is **characterized in that** the sub-display holder is provided with a back plate that straddles the frame. The rigidity of the sub-display holder is enhanced by provision of the back plate, thereby reducing an amount of deformation generated when pressing force is exerted on the sub-display holder.

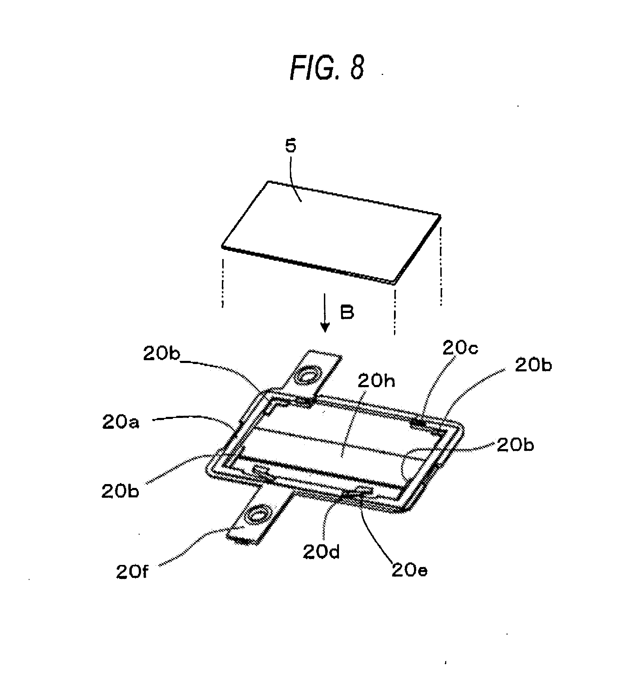

Fig. 8 shows an exploded perspective view of the sub-display holder 20 and the sub-display 5 of the second embodiment achieved when they are obliquely viewed from an elevated position. In Fig. 8, the sub-display 5 is overlaid on the sub-display holder 20 in the direction of arrow B in the same manner as that shown in Fig. 3. The basic configuration of the sub-display holder 20 is also identical with the basic configuration of its counterpart sub-display holder shown in Fig. 3. The sub-display holder 20 shown in Fig. 8 is provided with a back plate 20h for enhancing the rigidity of the sub-display holder, to thus prevent deformation of the frame 20a. The other portion of the sub-display holder 20 is basically identical with its counterpart of the sub-display holder 4 of the first embodiment (Fig. 3) except the portion particularly given explanations.

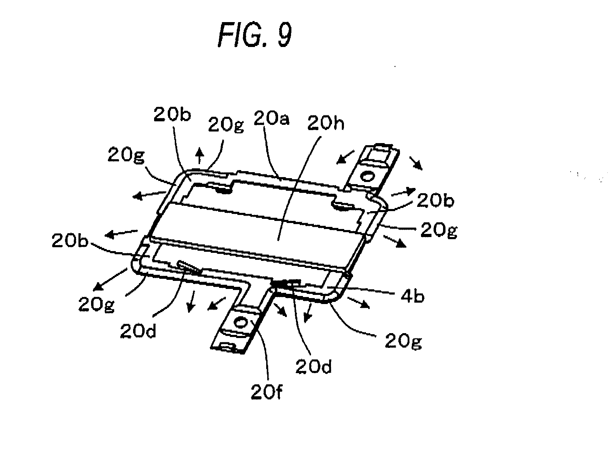

Fig. 9 is an oblique perspective view of the sub-display holder 20 of the second embodiment when the sub-display holder is turned inside out. The back plate 20h is provided on the frame 20a of the sub-display holder 20. The presence of the back plate 20h results in an increase in section modulus, which in turn makes the frame 20a less susceptible to deformation.

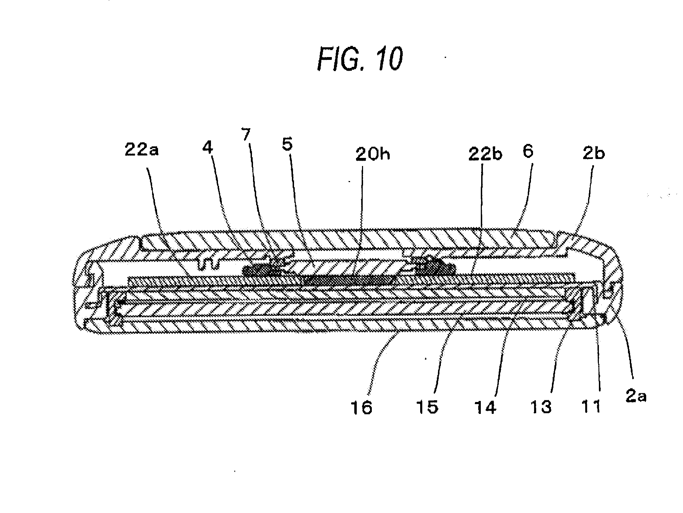

Fig. 10 shows a cross-sectional view of the second enclosure 2 of the folded portable phone of the second embodiment of the present invention. Fig. 10 shows that the printed board is divided into two sub-divisions 22a and 22b and that a back plate 20h of the sub-display holder 20 is housed in space between the sub-divisions.

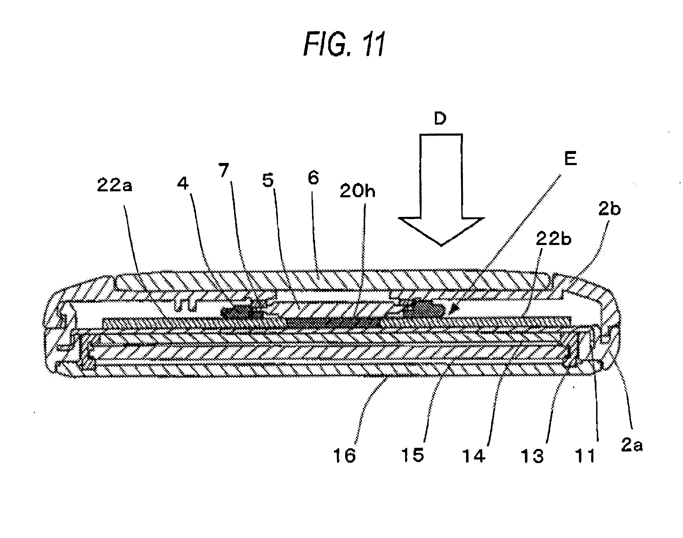

Fig. 11 again shows a cross-sectional view of the second enclosure 2 of the folded portable phone of the second embodiment of the present invention and also shows a state in which the sub-display panel 6 starts undergoing a press in the direction of arrow D. The pressing force exerted in the direction of arrow D propagates from the sub-display panel 6 to the sub-display enclosure 2b and further from the sub-display enclosure 2b to the sub-display holder 20. However, the rigidity of the sub-display holder 20 of the second embodiment is enhanced by the back plate 20h and hence is less susceptible to deformation, and force is transmitted to the printed board 22b while the sub-display holder 20 is held flat. Therefore, even when the sub-display and the main display come close to each other as a result of the enclosures of the folded portable terminal device being pressed, deformation or break of the main display is further prevented.

When subjected to deformation at the time of exertion of pressing force, the display holder 20 becomes deformed. However, even if the display holder 20 has become deformed, the tapered surface 20g that is an undersurface of the display holder 20 will contact the printed board 22b. Hence, pressing force does not act intensively on the backlight reflection plate 11, the light guide plate 14, and the main display 15 that are located closer to the main display side than is the printed board 12. Deformation or destruction of the main display can therefor be prevented even when pressing force exerts on the main display in an impacting manner.

In the first and second embodiments, explanations are provided by means of taking a liquid crystal display device as an example of the sub-display and the main display. The same also applies to another display means, such as a display device, using an organic EL element for both the sub-display and the main display or any one of them.

The first embodiment and the second embodiment have stated the example in which the bottom portion of the sub-display holder is given a shallow tapered shape; however, the bottom portion of the sub-display holder can also be given a round shape instead, When the portable terminal device is pressed, the pressing force propagating from the bottom portion of the sub-display holder to the main display is dispersed, thereby making it possible to prevent deformation or destruction of the main display.

Although the first embodiment and the second embodiment have described the example in which the corners of the bottom portion of the sub-display holder are made round, holes can be opened in a structure located beneath the corners of the bottom portion of the sub-display holder in place of or in addition to the round corners. When the portable terminal device is pressed, the pressing force propagating from the corners of the bottom portion of the sub-display holder to the main display is thereby dispersed, to thus make it possible to prevent deformation or destruction of the main display.

Although the present invention has been described in detail or by reference to the specific embodiments, it is manifest to those skilled in the art that the present invention be susceptible to various alterations or modifications without departing the spirit and scope of the present invention.

The present patent application is based on Japanese Patent Application No. 2007-259609 filed on October 3, 2007 in Japan, the entire subject matter of which is incorporated herein by reference.

### <Industrial Applicability>

Even when the sub-display and the main display come close to each other as a result of the enclosures of the portable terminal device being pressed, deformation or destruction of the main display can be prevented. The present invention can be applied to another portable terminal device including a main display provided on one side of an enclosure and a sub-display provided on the other side of the same, such as a portable phone, a PDA (Personal Digital Assistants or a portable information terminal), a notebook personal computer, and a portable game machine.

## Claims

1. A portable terminal device comprising a main display provided on one side of an enclosure and a sub-display provided on the other side of the enclosure, wherein a bottom portion of a sub-display holder has a shallow tapered shape.

2. A portable terminal device comprising a main display provided on one side of an enclosure and a sub-display provided on the other side of the enclosure, wherein a corner of a bottom portion of the sub-display holder has a round shape.

3. The portable terminal device according to claim 1 or 2, wherein the sub-display holder has a frame and a back plate straddling the frame.

## Amended claims

### Amended claims under Art. 19.1 PCT

1. A portable terminal device comprising a main display provided on one side of an enclosure and a sub-display provided on the other side of the enclosure, wherein the main display and the sub-display are provided so that at least one part of the main display and the sub-display are overlapped with each other in a vertical direction, wherein a bottom portion of a sub-display holder holding the sub-display has a shallow tapered shape toward an outside.

2. The portable terminal device according to claim 1, wherein a corner of the bottom portion of the sub-display holder has a round shape.

3. The portable terminal device according to claim 1 or 2, wherein the sub-display holder has a frame and a back plate straddling the frame.
